# EUROPEAN PATENT APPLICATION

(11) **EP 1 757 667 A2**
(43) Date of publication of application: **28.02.2007**
(21) Application number: 06254205.5
(22) Date of filing: 10.08.2006
(51) Int. Cl.: C09J 109/00

(54) **Adhesive composition and process for adhesion using the adhesive composition**

(30) Priority: 11.08.2005 JP 2005233240; 04.11.2005 JP 2005320738; 08.08.2006 JP 2006216114; 08.08.2006 JP 2006216117
(71) Applicant: Bridgestone Corporation, Tokyo 104-8340 (JP)
(72) Inventor: Sugi, Shinichiro c/o Bridgestone, Kodaira-shi Tokyo 187-8531 (JP); Giza, Emil c/o Bridgestone, Kodaira-shi Tokyo 187-8531 (JP); Kitamura, Yuji c/o Bridgestone, Kodaira-shi Tokyo 187-8531 (JP); Sato, Kenji c/o Bridgestone, Kodaira-shi Tokyo 187-8531 (JP)
(74) Representative: Whalley, Kevin

(57) **Abstract**

The present invention provides an adhesive composition exhibiting a great adhesive strength between an adherend and an adhesive composition and providing remarkably improved workability in attaching a sheet of an unvulcanized rubber composition by forming a hardened surface of an adhesive layer comprising the adhesive composition and a process for adhesion using the adhesive. The adhesive composition comprises a conjugated diene-based polymer (A) having at least one functional group having a photo-curable unsaturated hydrocarbon group at a chain end, a polymerizable compound (B), a photopolymerization initiator (C) and at least one of an active energy ray-shielding agent (D1) and a metal and/or metal compound (D2).

## Description

### TECHNICAL FIELD

The present invention relates to an adhesive composition and a process for adhesion using the adhesive composition. More particularly, the present invention provides an adhesive composition for rubber and a process for adhesion which comprises adhesion of a rubber composition to an adherend by vulcanization after irradiation of the adhesive composition with an active energy ray, where necessary.

### BACKGROUND ART

In general, rubber is a material exhibiting a great elongation and a small modulus and, for practical application of rubber utilizing the characteristics advantageously, rubber is used as a composite material in combination with other materials. Rubber can be applied to an adherend having the face of adhesion having complicated shapes easily and conveniently by forming an integrally combined composite of rubber and the adherend by adhesion of rubber and the adherend in vulcanization. Various adhesive compositions have been used for this purpose.

Recently, adhesive compositions using no solvents and adhesive compositions which takes the solvent into the adhesive layer in the step of solidification of the adhesive composition are developed for protection of the environment.

For example, JP-55-145768A discloses a process for adhesion in which an adhesive composition comprising a monomer polymerizable with an outside energy such as irradiation with ultraviolet light, visible light and a radiation including electron beams or application of heat is used, the adhesive composition is liquid when the surface of an adherend is covered with the adhesive composition so that formation of defects in adhesion due to gaps on the surface is suppressed, and the adhesive layer can be crosslinked to form a network structure by polymerizing the monomer in the treatment for adhesion. It is described that "By using a compound for coating works comprising a liquid hydrocarbon polymer having at least one type of double bond and(or), occasionally, at least one polyamine derivative, networks are formed rapidly by irradiation with an ionizing radiation such as electron beams with no supply of heat at all from the outside, and excellent adhesive ability to a rubber substrate can be exhibited." As for the process for the adhesion, it is described that "The adhesive may be applied to a completely vulcanized molded article and then networks can be formed; or the adhesive may be applied to a crude mixture in which networks are not formed in each layer, and networks may be formed in combination. In the latter process, when the treatment of vulcanization is conducted using electron beams, the use of sulfur as the vulcanizing agent and(or) the use of vulcanization accelerators can be omitted since networks are formed using the crude mixture." This process for adhesion is characterized in that the rubber component and the adhesive composition are fixed to each other by formation of networks on rubber, and the use of sulfur as the vulcanizing agent and(or) the use of vulcanization accelerators can be omitted in the formation of networks in the rubber and the adhesive composition.

WO2002/094962A1 and JP2005-247954A propose the improved process for adhesion, in which, after an adhesive composition is applied to an adherend, networks are formed in the adhesive composition by irradiation with a radiation such as ultraviolet light, visible light and electron beams, sulfur is transferred from the rubber to the adhesive layer by heating the unvulcanized rubber under a pressure, and a strong adhesion accompanied with the crosslinking reaction with sulfur can be obtained.

However, the adhesion between an adherend and the adhesive composition rather decreases due to excessive reaction for adhesion when the adhesive composition is completely crosslinked and hardened by strongly irradiating the adhesive composition on the adherend with the active energy ray. On the other hand, when it is desired that the reaction for adhesion is achieved to a suitable degree, the curing of the adhesive composition becomes insufficient, and workability in attachment of a sheet of an unvulcanized rubber composition markedly deteriorates due to tackiness on the surface of the adhesive composition. In other words, it is difficult that the excellent adhesion and the excellent workability are simultaneously exhibited.

Therefore, an adhesive composition which can exhibit the excellent adhesion and the excellent workability simultaneously has been desired.

### DISCLOSURE OF THE INVENTION

The present invention has been made under the above circumstances and has an object of providing a novel adhesive composition exhibiting a great adhesive strength between an adherend and an adhesive composition and providing remarkably improved workability in attaching a sheet of an unvulcanized rubber composition by forming a hardened surface of an adhesive layer comprising the adhesive composition and a process for adhesion using the adhesive.

As the result of intensive studies by the present inventors, it was found that the above object could be achieved by mixing an active energy ray-shielding agent into an adhesive composition. The present invention has been completed based on the knowledge.

The present invention provides an adhesive composition which comprises a conjugated diene-based polymer (A) having at least one functional group having a photo-curable unsaturated hydrocarbon group at a chain end, a polymerizable compound (B), a photopolymerization initiator (C) and at least one of an active energy ray-shielding agent (D1) and a metal and/or metal compound (D2); and a process for adhesion of an adherend to a sheet of a rubber composition which comprises the steps of; forming an adhesive layer by coating at least a portion of a surface of the adherend with an adhesive composition described above; irradiating a surface of the adhesive layer with an active energy ray; and vulcanizing a sheet of an unvulcanized rubber composition while the sheet is pressed to the surface of the adhesive layer which has been irradiated with the active energy ray.

### THE EFFECT OF THE INVENTION

In accordance with the present invention, the adhesive composition exhibiting a great adhesive strength between an adherend and an adhesive composition and providing remarkably improved workability in attaching a sheet of an unvulcanized rubber composition to the adherend by forming a hardened surface of an adhesive layer comprising the adhesive composition and a process for adhesion using the adhesive composition are provided.

### THE MOST PREFERRED EMBODIMENT TO CARRY OUT THE INVENTION

An adhesive composition of the present invention comprises a conjugated diene-based polymer (A) having at least one functional group having a photo-curable unsaturated hydrocarbon group at a chain end and the conjugated diene-based polymer (A) is a homopolymer or a copolymer of a conjugated diene which is modified at the chain end. Examples of the conjugated diene monomer include 1,3-butadiene, isoprene and 1,3-hexacliene. Among these conjugated dienes, 1,3-butadiene is preferable. As the copolymer of the conjugated diene, copolymers of the conjugated diene monomer and an aromatic vinyl monomer are preferable. Examples of the aromatic vinyl monomer include styrene and α-methylstyrene. Between these aromatic vinyl monomers, styrene is preferable. It is preferable that the main chain of the conjugated diene-based polymer has, as the unit in the molecular chain, a carbon-carbon double bond having hydrogen atom at the allyl position which tends to work as the crosslinking portion in the crosslinking reaction with sulfur. Examples of the conjugated diene-based polymer in the present invention include polyisoprene, polybutadiene, styrene-butadiene copolymers and isoprene-butadiene copolymers. It is preferable that the conjugated diene-based polymer (A) is liquid at the temperature of preparation of the adhesive composition and, in particular, liquid at 0°C or lower, since the workability is improved and the step of mixing the adhesive composition is facilitated. It is preferable that the conjugated diene-based polymer (A) is liquid and has a small vapor pressure at a temperature of 50°C or higher. However, it is not necessarily required that the condition of the conjugated diene-based polymer (A) be liquid at the temperature of the preparation of the adhesive composition as long as the prepared adhesive composition is liquid.

In the present invention, the photo-curable unsaturated hydrocarbon group is acryloyl group, methacryloyl group, acryloyloxyl group or methacryloyloxyl group. Acryloyl group and methacryloyl group are preferable. In general, the photo-curable unsaturated hydrocarbon group is introduced in the form of acryloyloxyl group or methacryloyloxyl group. A modified polymer obtained by introducing acryloyl group, methacryloyl group, acryloyloxyl group or methacryloyloxyl group at the chain end of a butadiene polymer is commercially available. Examples of the commercially available polymer include "BAC-45" (a trade name) manufactured by OSAKA YUKI KAGAKU KOGYO Co., Ltd. which is a polybutadiene modified with acrylic group obtained by introducing acryloyl group (CH₂=CHCO-) into the chain end of a butadiene polymer (the molecular weight of the polybutadiene portion Mw: 2800; the viscosity: 3.4 Pa·s; the saponification value: about 49); and "RIACRYL 3100" (a trade name) (Mw: 5100; the number of methacryloyl(oxyl) group: 2/molecular chain), "RIACRYL 3500" (a trade name) (Mw: 6800; the number of methaeryloyl(oxyl) group: 9/molecular chain) and "RIACRYL 3810" (a trade name) (Mw: 3200; the number of methacryloyl(oxyl) group: 8/molecular chain) manufactured by RICON RESINS Inc. which are polybutadiene modified with methacrylic group expressed by the following formula (1):

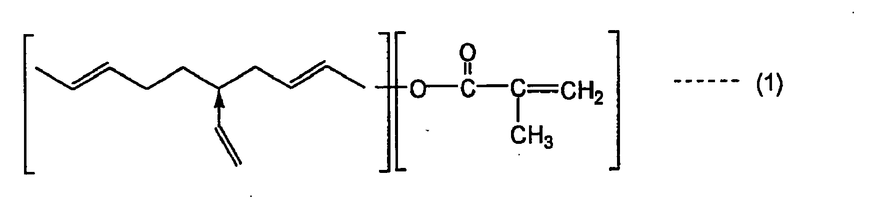

A living anion obtained after polymerization may be modified with an alkylene oxide such as ethylene oxide, propylene oxide and butylene oxide to introduce OH group at the chain end of a conjugated diene-based polymer, and the introduced OH group may be brought into the reaction with 2-acryloyloxyethyl isocyanate or 2-methacryloyloxyethyl isocyanate to introduce acryloyloxyl group or methacryloyloxyl group into the chain end of the conjugated diene-based polymer to obtain a conjugated diene-based polymer (A).

The weight-average molecular weight (Mw) of the conjugated diene-based polymer (A) has no upper limit as long as difficulty due to an excessively great viscosity of the adhesive composition does not arise in working. When Mw exceeds 100,000, application of the adhesive composition occasionally becomes difficult. When Mw is smaller than 500, sufficient adhesive ability is not exhibited occasionally when the unvulcanized rubber is vulcanized. From the above standpoint, Mw is preferably in the range of 500 to 100,000 and more preferably in the range of 1,000 to 10,000.

The polymerizable compound (B) described above is at least one compound selected from the group of polymerizable monomers (b1) and polymerizable oligomers (b2) preferably. This component (B) exhibits the effects of accelerating adhesive reaction to the sheet of an unvulcanized rubber composition and adjusting the viscosity of the adhesive composition.

It is preferable that a polymerizable monomer (b1) is at least one monomer selected from the group of 2-vinylpyridine, 4-vinylpyridine, m-(N,N-dimethylamino)styrene, p-(N,N-dimethylamino)styrene, acrylamide, methacrylamide, N-methyl-acrylamide, N-isopropylacrylamide, N-n-butylacrylamide, N-n-octyl-acrylamide, N,N-dimethylacrylamide, 1-vinylimidazole, allylamine, 2,b-distyrylpyndine, 2-dimethylamionoethyl methacrylate, N-vinyl-2-pyrrolidone, 2-vinyl-2H-indazoie, 4-diisopropylamino-1-butene, trans-2-butene-1,4-diamine, 2-vinyl-4,6-diamino-1,3,b-triazine, 4-methyl-5-vinyl-thiazole, N-vinylformamide, N,N-dimethylaminoethyl acrylate, N,N-dimethylaminopropyl acrylamide, acryloylmorpholine, N,N-diethyl-acrylamide, monofunctional (meth)acrylic monomers, difunctional (meth)acrylic monomers and (meth)acrylic monomers having a functionality of three or more.

It is preferable that polymerizable monomer (b1) is (meth)acrylic monomer (b3) having a structure represented by following formula (2): 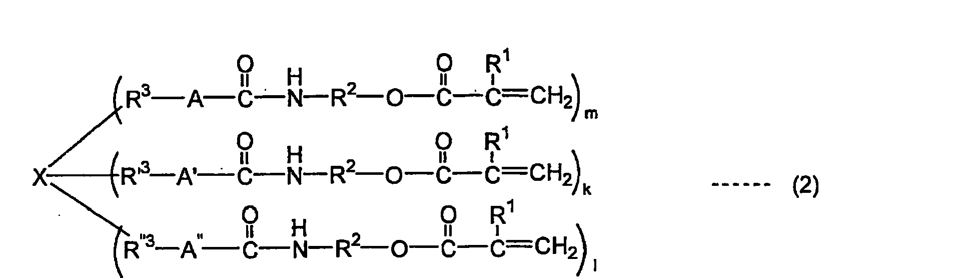 wherein X represents a heterocyclic group having nitrogen atom, A, A' and A" each represent the single bond, -O- bond, -S- bond or -NH- bond, R¹ represents hydrogen atom or methyl group, R² represents a divalent hydrocarbon having 1 to 12 carbon atoms, R³, R'³ and R"³ represent the single bond or a divalent hydrocarbon group having 1 to 12 carbon atoms which may be bonded to the group represented by X via a hetero atom respectively, m represents an integer of 1 to 3, k represents an integer of 0 to 2,1 represents an integer of 0 to 2, and 1 ≤ m+k+1 ≤ 3.

In formula (2) representing the structure of (meth)acrylic monomer (b3), the heterocyclic group having a nitrogen atom which is represented by X is a group derived from an electron pair-donating heterocyclic compound having a nitrogen atom described below. Examples of the divalent hydrocarbon group having 1 to 12 which is represented by R² include linear or branched alkylene groups having 1 to 12 carbon atoms, cycloalkylene groups having 5 to 12 carbon atoms, arylene groups having 6 to 12 carbon atoms and aralkylene groups having 7 to 12 carbon atoms.

Examples of the alkylene group include linear or branched alkylene groups having 2 to 5 carbon atoms such as ethylene group, trimethylene group, propylene group and various types of butylene groups. Examples of the cycloalkylene group having 5 to 12 carbon atoms include cylcopentylene group and various types of cyclohexylene groups. Examples of the arylene group having 6 to 12 carbon atoms include various types of phenylene groups and various types of tolylene groups. Examples of the aralkylene group having 7 to 12 carbon atoms include various types of benzylene group and various types of phenetylene groups.

Among the above groups, linear or branched alkylene groups having 2 to 5 carbon atoms are preferable.

Examples of the divalent hydrocarbon group having 1 to 12 carbon atoms which is represented by R³, R'³ and R"³ include linear or branched alkylene groups having 1 to 12 carbon atoms, cycloalkylene groups having 5 to 12 carbon atoms, arylene groups having 6 to 12 carbon atoms and aralkylene groups having 7 to 12 carbon atoms.

Examples of the alkylene group include methylene group, ethylene group, trimethylene group, propylene group, various types of butylene groups, various types of pentylene groups and various types of hexylene groups. Examples of the arylene group having 6 to 12 carbon atoms and the aralkylene group having 7 to 12 carbon atoms include the groups described above as the examples of the corresponding groups represented by R².

It is preferable that A, A' and A" in general formula (2) representing (meth)acrylic monomer (b3) each represent -O-, and R¹ represents hydrogen atom from the standpoint of the excellent photo-curing property.

The compounds shown above as the examples of polymerizable monomer (b1) and the (meth)acrylate-based monomer having a functionality of three or more are and, in particular, the (meth)acrylate-based monomer (b3) among these compounds, is used as the compound exhibiting the effect of accelerating the reaction of adhesion to the adherend or the sheet of an unvulcanized rubber composition.

The (meth)acrylic monomer (b3) can be obtained by the reaction of heterocyclic compound having nitrogen atom (b3-a) represented by the following formula (3): 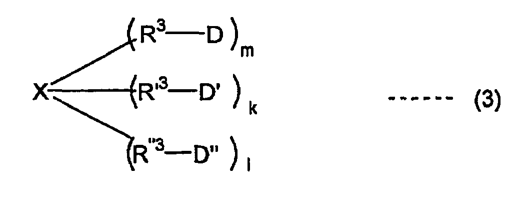 wherein X represents a heterocyclic group having nitrogen atom, R³, R'³ and R"³ represent the single bond or a divalent hydrocarbon group having 1 to 12 carbon atoms which may be bonded to the group represented by X via a hetero atom respectively, D, D' and D" represent hydroxyl group, mercapto group or carboxyl group respectively, m represents an integer of 1 to 3, k represents an integer of 0 to 2, 1 represents an integer of 0 to 2, and 1 ≤ m+k+1 ≤ 3, with an acrylic compound having isocyanate group (b3-b) represented by the following formula (4): 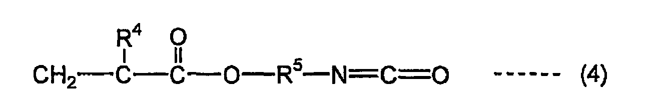 wherein R⁴ represents hydrogen atom or methyl group, and R⁵ represents a divalent hydrocarbon group having 1 to 12 carbon atoms.

Heterocyclic compound having nitrogen atom (b3-b) is a basic compound having the electron-donating property and is not particularly limited as long as the compound has nitrogen atom having an unpaired electron. Heterocyclic compound having nitrogen atom (b3-b) may comprise other hetero atoms such as oxygen atom and sulfur atom. Heterocyclic compound having nitrogen atom (b3-b) may be a compound having a single ring or a compound having a plurality of rings.

Examples of the heterocyclic compound having nitrogen atom which has a single ring and has nitrogen atom alone include azirine, aziridine, azetidine, 1H-pyrrol, 2H-pyrrol, pyrrolidine, 2-imiclazoline, 3-imidazoline, 1,2,3- triazole, pyrazole, imidazole, 1-pyrazoline, 3-pyrazoline, piperidine, pyridine, pyrazine, pyrimidine, 1,2,5-triazine, 1,2,4-triazine, 1H-azepine, 2H-azepine, 3H-azepine and 4H-azepine.

Examples of the heterocyclic compound having nitrogen atom which has a plurality of rings and has nitrogen atom alone include indole, benzimidazole, purine, carbazole, β-carboline, quinoline, isoquinoline, cinnoline, pteridine, acridine, phenantridine, quinoxaline and phthalazine.

Examples of the heterocyclic compound having nitrogen atom which has a single ring and has nitrogen atom and other hetero atoms include 3-oxazoline, 2-oxazoline, 4-oxazoline, oxazole, isooxazole, 1,3,4-oxadiazole, 1,4-oxazine, morpholine, 2-thiazoline, 3-thiazoline, 4-thiazoline, 1,2,3-thiadiazole, thiazole, isothiazole, 1,4-thiazine and 1,4-thiazane.

Examples of the heterocyclic compound having nitrogen atom which has a plurality of rings and has nitrogen atom and other hetero atoms include benzoxazole, 1H-fluoro[3,4,-c]pyrazole, phenoxazine and benzothiazole.

It is necessary that at least one functional group having an active hydrogen atom such as hydroxyl group, mercapto group, amino group and carboxyl group as the groups represented by D, D' and D" is introduced into the heterocyclic compound having a nitrogen (b3-a) represented by formula (3) so that the functional group is brought into the reaction with isocyanate group in acrylic compound having isocyanate group (b3-b). The functional group and isocyanate group are brought into the following reactions, and (meth)acrylic monomer (b3) having a photopolymerizable (meth)acryloyl group and a heterocyclic group having nitrogen atom which is an electron-donating basic group in one molecule can be obtained.

The isocyanate reacts with the functional group having various types of hydrogen atoms easily at the ordinary temperature under the ordinary pressure, in general. Among the functional groups, hydroxyl group is preferable. In general, it is preferable that the functional group is bonded with the heterocyclic group having nitrogen atom via the group represented by R³. The functional group may be bonded directly with the heterocyclic group having a nitrogen atom. It is preferable that R³, R'³ and R"³ represent methylene group or ethylene group respectively.

Examples of the heterocyclic compound having nitrogen atom into which hydroxyl group is introduced include 2-pyridylmethanol, 3-pyridylmethanol, 4-pyridylmethanol, 2-chloro-5-hydroxylmethylpyridine. 2-hydroxypyridinemethanol, 4-methyl-5-(2-hydroxyethyl)tbiazole, 1-(2-hydroxyethyl)imidazole, 2-butyl-5-hydroxymethylimidazole, 2-phenyl-4,5-dihydroxymethylimidazole, 4-methyl-5-hydroxypyridine, 8-hydroxy-quinoline and 4-hydroxyquinoline. Among the above compounds, 4-pyridiylmethanol is preferable.

Examples of the heterocyclic compound having nitrogen atom into which amino group is introduced include 3-aminomethylpyridine, 2-amino-5-aminomethylpyridine, 3-aminomethyl-6-chloropyridine, 2-aminopyridine, 3-aminopyridine, 4-aminopyridine, 4-dimethylaminopyridine, 2-amino-4,6-dimethoxypyridine and 2-aminothiazole.

Examples of the heterocyclic compound having nitrogen atom into which mercapto group is introduced include 2-mercaptobenzimidazole and mercaptobenzothiazole.

Examples of the heterocyclic compound having nitrogen atom into which carboxyl group is introduced include 2-pyridinecarboxylic acid, 3-pyridinecarboxylic acid, 4-pyridinecarboxylic acid, 2,3-pyridine-dicarboxylic acid, quinolinecarboxylic acid, imidazole-4,5-dicarboxylic acid and 2,4-dialkylimidazole-5-dithiocarboxylic acids.

Examples of the heterocyclic compound having nitrogen atom into which a plurality of functional groups such as hydroxyl group, amino group and carboxyl group are introduced include 4-hydroxypyridine-2,6-dicarboxylic acid, 6-hydroxynicotinic acid amide and 6-aminonicotinic acid.

Examples of (meth)acrylic monomer (b3) include 2-acryloyloxyethyl isocyanate, 2-methacryloyloxyethyl isocyanate, 3-acryloyloxylpropyl isocyanate and 3-methacryloyloxypropyl isocyanate. It is preferable that the (meth)acrylic monomer having isocyanate group is used in an amount by equivalent 1 to 3 times and more preferably 1 to 1.5 times as much as the amount by equivalent of heterocyclic compound having nitrogen atom and a functional group (b3-a) described above.

It is preferable that the time of the reaction is decreased by adding 0.001 to 1% by mass of a tin compound which is typically represented by (R⁶)₂Sn[OC(=O)R⁷]₂ as the catalyst to the oligomer described above. R⁶ represents an alkyl group having 1 to 6 carbon atoms or phenyl group which may have substituents, and R⁷ represents an alkyl group having 1 to 23 carbon atoms. Examples of the catalyst include di-n-butyltin dilaurate.

The solvent used for the reaction is not particularly limited as long as the solvent is inert to the reaction. From the standpoint of the handling, toluene and xylene are preferable.

The temperature of the reaction is, in general, in the range of the room temperature to 100°C, and the time of the reaction is, in general, in the range of about 5 minutes to 10 hours.

After the above steps, (meth)acrylic monomer (b3) having a photopolymerizable (meth)acryloyl group and a heterocyclic group having nitrogen atom which is an electron-donating basic group in one molecule can be obtained.

As polymerizable monomer (b1), various types of monofunctional (meth)acrylic monomers, difunctional (meth)acrylic monomers and (meth)acrylic monomers having a functionality of three or more other than the compounds described above may be used.

Examples of the monofunctional (meth)acrylic monomer include (meth)acrylates such as cyclohexyl (meth)acrylate, 2-ethylhexyl (meth)acrylate, lauryl (meth)acrylate, stearyl (meth)acrylate, isobornyl (meth)acrylate, phenoxypolyethylene glycol acrylate, phenoxyethylene glycol acrylate, phenoxydiethylene glycol acrylate and phenoxytriethylene glycol acrylate.

Examples of the difunctional (meth)acrylic monomer include 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, hydroxypivalic acid neopentyl glycol di(meth)acrylate, dicyclopentanyl di(meth)acrylate, dicyclopentenyl di(meth)acrylate modified with caprolactone, phosphoric acid di(meth)acrylate modified with ethylene oxide, cyclohexyl di(meth)acrylate modified with allyl group, isocyanurate di(meth)acrylate, dipropylene glycol diacrylate (PO 2 moles) (manufactured by SHIN NAKAMURA KAGAKU KOGYO Co., Ltd.; trade name: APG-100), tripropylene glycol diacrylate (PO 3 moles) (manufactured by SHIN NAKAMURA KAGAKU KOGYO Co., Ltd.; trade name: APG-200), polypropylene glycol #400 diacrylate (PO 7 moles) (manufactured by SHIN NAKAMURA KAGAKU KOGYO Co., Ltd.; trade name: APG-400), polypropylene glycol #700 diacrylate (PO 12 moles) (manufactured by SHIN NAKAMURA KAGAKU KOGYO Co., Ltd.; trade name: APG-700), Tricyclodecanedimethanol diacrylate (manufactured by SHIN NAKAMURA KAGAKU KOGYO Co., Ltd.; trade name: A-DCP) and polypropylene glycol dimethacrylate (manufactured by SHIN NAKAMURA KAGAKU KOGYO Co., Ltd.; trade name: 9PG).

The monofunctional (meth)acrylic monomer and the difunctional (meth)acrylic monomer are used as the viscosity modifier. The viscosity modifier is available as commercial products. Examples of the monofunctional monomer include phenoxypolyethylene glycol monoacrylate (manufactured by SHIN NAKAMURA KAGAKU KOGYO Co., Ltd.; trade name: "AMP-60G"), phenoxyethylene glycol monoacrylate (manufactured by SHIN NABAMURA KAGAKU KOGYO Co., Ltd.; trade name: "AMP-10G"), phenoxydiethylene glycol monoacrylate (manufactured by SHIN NAKAMURA KAGAKU KOGYO Co., Ltd.; trade name: "AMP-20GY"), tetrahydrofurfuryl monoacrylate (manufactured by SARTOMER Company; trade name: "SR-285") and isooctyl monoacrylate (manufactured by SARTOMER Company; trade name: "SR-440").

Examples of the (meth)acrylic monomer having a functionality of three or more include trimethylolpropane tri(meth)acrylate, dipentaerythritol tri(meth)acrylate, dipentaerythritol tri(meth)acrylate modified with propionic acid, pentaerythritol tri(meth)acrylate, trimethylolpropane tri(meth)acrylate modified with propylene oxide, tris(acryloxyethyl) isocyanurate, dipentaerythritol penta(meth)acrylate modified with propionic acid, dipentaerythritol hexa(meth)acrylate and dipentaerythritol hexa(meth)acrylate modified with caprolactone.

Examples of the commercially available (meth)acrylic monomer having a functionality of three or more include pentaerythritol polyethoxyacrylate (manufactured by NIPPON KAYAKU Co., Ltd.; trade name: "KAYARAD THE-330"), pentaerythritol polypropoxyacrylates (manufactured by NIPPON KAYAKU Co., Ltd.; trade names: "KAYARAD TPA-320" and "KAYARAD TPA-330"), dipentaerythritol polyacrylate (manufactured by ARAKAWA KAGAKU KOGYO Co., Ltd.; trade name: "BEAMSET 700") and pentaerythritol polyacrylate (manufactured by ARAKAWA KAGAKU KOGYO Co., Ltd.; trade name: "BEAMSET 710").

It is preferable that polymerizable oligomer (b2) is a (meth)acrylic oligomer.

Examples of the (meth)acrylic oligomer include polyester (meth)acrylate-based oligomers, epoxy (meth)acrylate-based oligomers, urethane (meth)acrylate-based oligomers, polyether (meth)acrylate-based oligomers, polybutadiene (meth)acrylate-based oligomers and silicone (meth)aciylate-based oligomers. The polyester (meth)acrylate-based oligomer can be obtained, for example, by esterification with (meth)acrylic acid of hydroxyl groups of a polyester oligomer having hydroxyl groups at both chain ends which is obtained by condensation of a polybasic carboxylic acid and a polyhydric alcohol or by esterification with (meth)acrylic acid of hydroxyl groups at the chain ends of an oligomer which is obtained by addition of an alkylene oxide to a polybasic carboxylic acid. The epoxy (meth)acrylate-based oligomer can be obtained by esterification with (meth)acrylic acid of the oxirane ring in an epoxy resin of the bisphenol type or an epoxy resin of the novolak type having a relatively low molecular weight. An epoxy (meth)acrylate oligomer modified with carboxyl group which is obtained by partially modifying the epoxy (meth)acrylate-based oligomer with a dibasic carboxylic acid anhydride can also be used. The urethane (meth)acrylate-based oligomer can be obtained, for example, by esterification with (meth)acrylic acid of a polyurethane oligomer which is obtained by the reaction of a polyether polyol or a polyester polyol with a polyisocyanate. Polyol (meth)acrylate-based oligomer can be obtained by esterification of hydroxyl group in a polyether polyol with (meth)acrylic acid.

It is preferable that the content of the polymerizable compound (B) is 20 to 400 parts by mass per 100 parts by mass of the conjugated diene-based polymer (A). When the content is within the range of 20 to 400 parts by mass, the effect of adjusting the viscosity with the component (B) can be exhibited.

The photopolymerization initiator (C) is used when active rays such as ultraviolet light and visible light are used as an active energy ray.

It is preferable that the photopolymerization initiator (C) is selected from the group of 2,4-diethylthioxanthone; p-dimethylaminobenzoic acid isoamyl ester; benzoin; benzoin alkyl ethers such as benzoin ethyl ether, benzoin n-propyl ether, benzoin isopropyl ether, and benzoin isobutyl ether; 2,2-dimethoxy-2-phenylacetophenone; benzophenone; benzil; diacetyl; diphenyl sulfide; eosine; thionine; 9,10- anthraquinone; and 2-ethyl-9,10-anthraquinone. Among these compounds, 2,4-diethylthioxanthone (for example, a product manufactured by NIPPON KAYAKU Co., Ltd.; trade name: "KAYACURE DETX-S") and p-dimethylaminobenzoic acid isoamyl ester (for example, a product manufactured by NIPPON KAYAKU Co., Ltd.; trade name: "KAYACURE DMBI") are preferable.

It is preferable that the content of photopolymerization initiator is 0.1 to 10 parts by mass per 100 parts by mass of the conjugated diene-based polymer (A).

Active energy ray-shielding agent (D1) used in the present invention is a substance having the property of shielding active energy rays by strongly scattering or absorbing active energy rays. The agent may be an inorganic substance or an organic substance as long as the agent has the above property.

Examples of the substance having the property of strongly scattering active energy rays include titanium oxide and zinc oxide. Examples of the substance having the property of strongly absorbing active energy rays include carbon black, cerium oxide and various types of organic ultraviolet light absorbents. Examples of the organic ultraviolet light absorbent include benzotriazole-basecl absorbents such as 2-(2-hydroxy-5-methylphenyl)benzotriazole, 2-[2-hydroxy-3-(3,4,5-tetrahydrophthalimidomethyl)-5-methylpheny]benzotriazole, 2-(2-hydroxyl-5-tert-octylphenyl)benzotriazole and 2-(3-tert-butyl-2-hydroxyl-5-methylphenyl)-5-chlorobenzotriazole and benzophenone-based absorbents such as 2-hydroxy-4-n-octoxybenzophenone.

It is preferable that the content of the active energy ray-shielding agent (D1) is 1 to 50 parts by mass per 100 parts by mass of the conjugated diene-based polymer (A) although the content is different depending on the type of the agent. When the content is 1 parts by mass or greater, the effect of shielding active energy rays with the component (D1) can be exhibited. Since tackiness of the surface is eliminated due to sufficient hardening of the surface of the adhesive layer and, at the same time, the excessive reaction of adhesion at the face of adhesion with the adherend is prevented, the excellent adhesion between the adhesive layer and the adherend is obtained. When the content is 50 parts by mass or smaller, the effect of shielding active energy rays is not exhibited excessively, and the reaction of adhesion between the adhesive layer and the adherend proceeds excellently.

As the metal in the metal and/or metal compound (D2), at least one metal selected from the group of Mg, Al, Sc, Ti, V, Cr, Mn, Fe, Co, Ni, Cu, Zn, Mo, Ru, Rh, Pb, Ag, Sn, Pb, W, Re, Os and Ir is preferable. Among these metals, metal elements in Period 4 of Group 3 to Group 12 of the Periodic Table are more preferable. A metal selected from the group of Sc, Ti, V, Cr, Mn, Fe, Co, Ni, Cu and Zn is most preferable.

It is preferable that the content of the metal and/or metal compound (D2) described above is 0.1 to 10 parts by mass as the amount of the metal component per 100 parts by mass of the conjugated diene-based polymer (A). When the content is in the above range, the effect of improving the adhesive ability with component (D) is more remarkably exhibited.

It is preferable that the metal and/or metal compound (D2) is at least one species selected from the group of organic acid salts and organic complex compounds of metals and ions formed by dissociation thereof. As the organic acid forming the organic acid salt, aliphatic carboxylic acids, alicyclic carboxylic acids and dithiocarbamic acids are preferable. Examples of the aliphatic carboxylic acid include octylic acid, stearic acid and versatic acid. Examples of the alicyclic carboxylic acid include naphthenic acid. Examples of the dithiocarbamic acid include dimethyldithiocarbamic acid, diethyldithiocarbamic acid and di-n-butyldithiocarbamic acid. The organic acid may be used singly or in combination of two or more. As the organic complex compound of metal, metal acetylacetonates are preferable.

The metal and/or metal compound (D2) may be an inorganic acid salt of a metal and/or an ion formed by dissociation thereof. It is preferable that the inorganic acid forming the inorganic acid salt is hydrochloric acid, sulfuric acid, nitric acid, hypochlorous acid, phosphoric acid, silicic acid or a mixture thereof. The metal compound may be a metal oxide, a metal nitride, a metal sulfide or a mixture thereof.

It is preferable that the adhesive composition of the present invention further comprises an electron-pair donating compound (E) to improve the effect of increasing the adhesive ability of metal and/or metal compound (D2). As an electron-pair donating compound (E), compounds having nitrogen atom having an unpaired electron and/or compounds forming a compound having a structure having an unpaired electron by thermal decomposition can be used.

As the compound having nitrogen atom having an unpaired electron, at least one compound selected from the group of amine compounds, compounds having an aliphatic amine residue and compounds having a heterocyclic amine residue can be used.

Examples of the amine compound include aliphatic amines, aromatic amines, aldehyde amines, guanidines, thioureas and heterocyclic amines.

Examples of the aliphatic amine include aliphatic monoamines such as dibutylamine, diamines such as ethylenediamine and macromolecular amines such as polyethylenepolyamines. Examples of the aromatic amine include aniline, m-phenylenediamine and 2,4-toluylenediamine. Examples of the aldehyde amine include reaction products of n-butylaldehyde and aniline such as NOCCELOR 8 (a trade name, manufactured by OUCHI SHINKO KAGAKU KOGYO Co., Ltd.). Examples of the guanidine include diphenylguanidine (DPG), di-o-tolylguanidine (DOTG) and o-tolylbiguanidine. Examples of the thiourea include thiocarbanilide, N,N'-diethylthiourea, dibutylthiourea, dilaurylthiourea, trimethylthiourea and tetramethylthiourea. Examples of the heterocyclic amine include heterocyclic compounds having nitrogen atom such as pyridine and 2-methylimidazole.

Examples of the compound having an aliphatic amine residue and the compound having a heterocyclic amine residue include 2-vinylpyridine, 4-vinylpyridine, m-(N,N-dimethylamino)styrene, p-(N,N-dimethylamino)styrene, 1-vinylimidazole, allylamine, 2,5-distyrylpyridine, N-vinyl-2-pyrrolidone, 2-vinyl-2H-indazole, 4-diisopropylamino-1-butene, trans-2-butene-1,4-diamine, 2-vinyl-4,6-diamino-1,3,5-triazine and 4-methyl-5-vinylthiazole.

As the compounds forming a compound having a structure having an unpaired electron by thermal decomposition, vulcanization accelerators are preferable. The vulcanization accelerators are commonly used for the vulcanization of conjugated diene rubbers as accelerators. Examples of the vulcanization accelerators include thiazoles such as mercaptobenzothiazole (MBT) and dibenzothiazyl disulfide (MBTS or DM as used widely); sulfenamides such as N-tert-butyl-2-benzotbiazolylsulfenamide (BBS or NS as used widely), N,N'-dicyclohexyl-2-benzothiazolylsulfenamide (DZ as used widely), N-cyclohexyl-2-benzothiazolylsulfenamide (CBS or CZ as used widely) and N-oxydiethylene-2-benzothiazolesulfenamide (OBS or NOBS as used widely); and thiurams such as tetramethylthiuram monosulfide.

It is preferable that the content of the electron-pair donating compound (E) is 1 to 30 parts by mass per 100 parts by mass of the conjugated diene-based polymer (A). When the amount is in the above range, the effect of improving the adhesive ability with the component (E) can be further increased.

The adhesive composition of the present invention may further comprise additives as long as the effect of the present invention is not adversely affected. Examples of the additive include various tackifiers for improving tight attachment such as terpene resins, terpene phenol resins, coumarone resins, coumarone-indene resins, petroleum-based hydrocarbons and rosin derivatives, coloring agents such as titanium black and inorganic fillers such as silica.

The adhesive composition of the present invention is used for adhesion of rubber compositions with a wide range of adherends such as resin materials and, in particular, used advantageously for adhesion of rubber compositions with resin materials.

In the present invention, as the material of the adherend which is adhered with the rubber composition, thermoplastic resins are preferable although the material of the adherend is not particularly limited. Examples of the thermoplastic resin include polyamides, polyesters, polyolefins such as polyethylene and polypropylene, polycarbonates, polyacrylates, styrene-based resins such as ABS resins and vinyl chloride resins. Among these thermoplastic resins, polyesters which exhibit a great mechanical strength and, comparatively, have difficulty in adhesion with rubber in accordance with conventional processes are preferable. The form of the adherend of the resin may be any of films, fibers, nonwoven fabrics, monofilament cords and multifilament cords. Products of extrusion molding and injection molding can also be used. Among these forms, films of the resin are preferable and polyester films are more preferable.

In the process for adhesion of the present invention, a coating layer of the adhesive composition is formed on at least one portion of the surface of an adherend such as one face of an adherend in the sheet form using the adhesive composition described above by dipping, brushing, flowing, spraying, roll coating or knife coating. The surface of the adherend may be treated by irradiation with electron beams or microwaves, by corona discharge or by exposure to plasma in advance. The thickness of the adhesive layer is preferably 0.5 to 50 µm and more preferably 1 to 10 µm.

The adhesive layer formed as described above is irradiated with an active energy ray. The active energy rays mean active rays of ultraviolet light and visible light such as rays from visible light lasers. Rays of charged particles such as electron beams and X-rays, rays of particles having no charge such as neutron rays and X-rays and ionizing radiations such as Y-rays are not included in the active energy rays used in the present invention. Among the above active energy rays, ultraviolet light is preferable. When ultraviolet light is used for the irradiation, in general, the amount of the irradiation is 100 to 3,000 mJ/cm², and the time of the irradiation is 1 to 30 seconds. Although the irradiation may be conducted under the atmosphere of the air, it is preferable that the irradiation is conducted under an atmosphere of an inert gas so that the effect of the irradiation is not decreased. As the inert gas, nitrogen gas, argon gas, helium gas, neon gas, krypton gas and xenon gas are preferable, and nitrogen gas is more preferable due to easy handling and low cost.

Then, while a sheet of an unvulcanized rubber composition is pressed to the adhesive layer under a pressure of 0.5 to 5 MPa, the covulcanization reaction is allowed to proceed between conjugated diene-based polymer (A) and the rubber by heating preferably at 140 to 190°C preferably for 10 to 30 minutes, and a strong adhesive force is obtained between the adhesive composition and the rubber.

When the adhesive composition of the present invention comprises the active energy ray-shielding agent (D1), the amount of irradiation can have a gradient within the adhesive layer in a manner such that the amount of irradiation is greater on the surface of the adhesive layer at the side of the irradiation and is smaller on the surface of the adhesive layer at the side of the surface of the adherend. Due to the gradient formed in the amount of the irradiation of the active energy ray within the adhesive layer, the curing reaction can be completed on the surface of the adhesive layer to eliminate tackiness of the surface, and the workability in attachment with a sheet of an unvulcanized rubber composition can be remarkably improved. At the same time, the reaction of adhesion can proceed to a suitable degree on the surface of the adherend to increase the adhesive strength. In other words, the improvements in the workability and in the adhesive property can be achieved simultaneously.

When the adhesive composition of the present invention comprises metal and/or metal compound (D2), at least a portion of the surface of the adherend may be coated with the adhesive composition to form a coating layer, and the adhesive strength is increased when the reaction of adhesion with the adherend proceeds by the irradiation with the active energy ray.

In the present invention, it is preferable that an undercoating layer (a primer layer) is formed on at least a portion of the surface of the adherend, and the adhesive composition described above is applied to the formed undercoating layer. It is preferable that the thickness of the undercoating layer is 1 to 10 µm. For the undercoating layer, a conventional agent for the adhesion treatment suitably selected in accordance with the material of the adherend can be used. The undercoating composition is not particularly limited. It is preferable that the undercoating composition is a composition comprising 5 to 50 parts by mass of a compound (G) having 3 or more acryloyloxyl groups and/or methacryloyloxyl groups per 100 parts by mass of a compound (F) having a skeleton structure of bisphenol which is represented by the following formula (5): 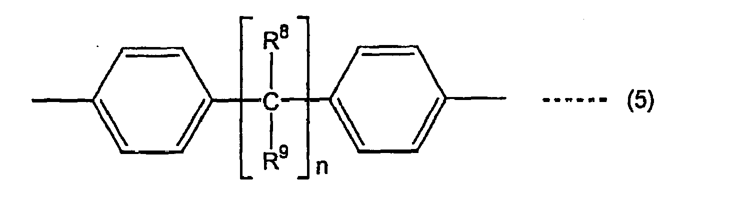 wherein R⁸ and R⁹ independently represent hydrogen atom or an alkyl group having 1 to 3 carbon atom, and preferably hydrogen atom or methyl group respectively, and n represents an integer of 1 to 3.

It is preferable that component (G) is a compound having, in combination with the group having a skeleton structure of bisphenol represented by formula (5), an end group represented by the following formula (6): 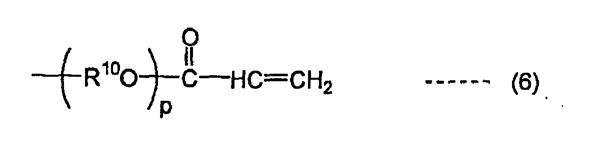 wherein R¹⁰ represents an alkylene group having 2 to 5 carbon atoms and preferably ethylene group, and p represents an integer of 1 to 5 and preferably 1 to 3.

Component (G) is commercially available. Examples of the commercially available component (G) include bisphenol F diacrylate modified with ethoxy group (manufactured by NIPPON KAYAKU Co., Ltd.; trade name: "KAYARAD R-712"), bisphenol A diacrylate modified with ethoxy group (manufactured by NIPPON KAYAKU Co., Ltd.; trade name: "KAYARAD R-551"), bisphenol A dimethacrylates modified with ethoxy group (manufactured by SARTOMER Company; trade names: "SR-348", "SR-480" and "SR9036") and bisphenol A diacrylate modified with ethoxy group (manufactured by ARAKAWA KAGAKU KOGYO Co., Ltd.; trade name: "BEAMSET 750").

To the undercoating composition, a conjugated diene-based polymer which is used as conjugated diene-based polymer (A) in the adhesive composition described above may be added in an amount of 0.5 to 10 parts by mass per 100 parts by mass of component (G) to enhance the adhesive strength of the coating film. Where desired, the tackfier and the photopolymerization initiator described above may be added in amounts of 5 to 30 parts by mass and 0.1 to 5 parts by mass, respectively, per 100 parts by mass of the component (G). Styrene monomer may be added in an amount of about 1 to 20 parts by mass per 100 parts by mass of the component (G) as the agent for accelerating the radical reaction. In combination with the above components, at least one additive selected from the group consisting of the epoxy compounds, the inorganic fillers, the macromolecular fillers and the basic compounds which are described for the adhesive composition may used in an amount of 5 to 10 parts by mass per 100 parts by mass of the component (G).

It is preferable that the surface coated with the undercoating composition having the above composition is irradiated with an active energy ray or another radiation ray.

In a typical example of the use of the adhesive composition of the present invention, an undercoating layer is formed on an adherend, a layer of the adhesive composition is laminated to the undercoating layer and, after irradiation with ultraviolet light or another radiation ray where necessary, an unvulcanized rubber is pressed to the adhesive layer and vulcanized so that a composite having the adherend, the undercoating layer, the layer of the adhesive composition and the rubber laminated in this order is obtained.

The rubber component in the sheet of an unvulcanized rubber used as the adherend of the rubber composition in the present invention is not particularly limited. Examples of the rubber component include natural rubber; conjugated diene-based synthetic rubbers such as polyisoprene synthetic rubber (IR), polybutadiene rubber (BR), styrene-butadiene copolymer rubber (SBR), acrylonitrile-butadiene rubber (NBR), chloroprene rubber (CR) and butyl rubber (IIR); ethylene-propylene copolymer rubbers (EPDM); ethylene-propylene-diene copolymer rubbers (EPDM); and polysiloxane rubbers. Among these rubber components, natural rubber and conjugated diene-based synthetic rubbers are preferable. The rubber component may be used singly or in combination of two or more.

The vulcanization of the rubber can be conducted by using, for example, sulfur; a thiuram polysulfide compound such as tetramethylthiuram disulfide and dipentamethylenethiuram tetrasulfide; 4,4-dithiomorpholine; p-quinonedionime; p,p'-dibenzoquinone dioxime; cyclic sulfur imide; or a peroxide as the vulcanizing agent. Sulfur is preferable.

To the rubber, various compounding ingredients conventionally used in the rubber industry can be suitably added. Examples of the additive include fillers such as carbon black, silica and aluminum hydroxide, vulcanizing agents, antioxidants and softeners. The rubber may be used as a composite material with particles, fibers and fabrics. of various materials

In the process of the present invention, when at least a portion of the surface of the adherend is coated with the adhesive composition described above to form the adhesive layer, and the unvulcanized rubber is pressed to the adhesive layer and vulcanized, sulfur in the unvulcanized rubber migrates to the adhesive layer, and the conjugated diene-based polymer (A) and the rubber component in the unvulcanized rubber composition are covulcanized. Therefore, a strong adhesion is achieved between the adherend and the sheet of the rubber composition via the adhesive layer. Polymerizable monomer (b1) works as the catalyst for the reaction of the unsaturated portion in component (A) and sulfur migrated from the unvulcanized rubber and accelerates the vulcanization.

### EXAMPLES

The present invention is described more specifically with reference to examples in the following. However, the present invention is not limited to the examples.

Composites of rubber and an adherend were prepared and evaluated by tests in accordance with the following methods.

### Examples 1 to 3 and Comparative Example 1 to 4

### 1. Preparation of a polyester film-rubber composite

One face of a polyester film having a thickness of 188 µm (a polyethylene terephthalate film manufactured by TOYO BOSEKI Co., Ltd.; trade name: A4100) was coated with an adhesive composition prepared in accordance with the formulation shown in Table 1 using a film coater, and an adhesive layer having a thickness of 3 to 5 µm was formed. The irradiation with ultraviolet light was conducted under the condition shown in Table 1.

To the polyester film having the adhesive layer obtained as described above, a sheet of an unvulcanized rubber composition prepared in accordance with the formulation shown in Table 2 was pressed and vulcanized under a pressure of 1.5 MPa at a temperature of 160°C for 20 minutes. In this manner, 7 types of polyester film-rubber composites having a thickness of 2.3 mm and a size of 80 mmx80mm were obtained.

### 2. Test for evaluation of the curing property

The curing property of the surface of an adhesive layer after irradiation with ultraviolet light was evaluated in accordance with the following procedures.
(1) A polyester film having the adhesive layer was brought into contact with a sheet of an unvulcanized rubber composition at the face of the adhesive layer irradiated with ultraviolet light.
(2) The polyester film is separated from the sheet of an unvulcanized rubber composition.
(3) The condition of attachment of the adhesive to the portion of the sheet of an unvulcanized rubber composition where the polyester film had been attached was examined by visual observation.

The result was evaluated as "excellent" when no adhesive was attached, as "good" when the adhesive was attached in a small amount so that substantially no effects were exhibited on the workability, and as "poor" when the adhesive was attached in an amount such that adverse effects were exhibited on the workability. The results are shown in Table 1.

### 3. Test for evaluation of the adhesive property

The 7 types of the polyester film-rubber composites prepared above were cut into a piece having a width of 25 mm to prepare a test piece for the peeling test respectively.

Using the prepared test piece, the test of peeling the rubber layer from the polyester film was conducted at an angle of peeling of 180 degrees (the T-peeling) at a tensile speed of 50 mm/minute, and the peeling strength was obtained. After the peeling, the fraction of the area of the surface coated with the rubber per the surface area of the polyester film (the fraction of rubber attachment) was measured, and the adhesive property was classified into a rank in accordance with the criterion shown in Table 3. The results are shown in Table 1.

**Table 1**

| | | Examples | | | Comparative Examples | | | |
|---|---|---|---|---|---|---|---|---|
| | | 1 | 2 | 3 | 1 | 2 | 3 | 4 |
| Formulation for adhesive composition (part by mass) | | | | | | | | |
| conjugated diene-based polymer (A) *1 | | 100 | 100 | - | 100 | 100 | 100 | - |
| conjugated diene-based polymer (A) *2 | | - | - | 100 | - | - | - | 100 |
| 4-vinylpyridine | | 10 | 10 | - | 10 | 10 | 10 | - |
| acrylic monomer *3 | | 15 | 15 | - | 15 | 16 | 16 | - |
| acrylic monomer *4 | | 20 | 20 | - | 20 | 20 | 20 | - |
| acrylic monomer *5 | | 7 | 7 | - | 7 | 7 | 7 | - |
| acrylic monomer *6 | | - | - | 70 | - | - | - | 70 |
| photopolymerization initiator *7 | | 3 | 3 | - | 3 | 3 | 3 | - |
| photopolymerization initiator *8 | | - | - | 6 | - | - | - | 6 |
| dispersion of carbon black *9 | | 30 | 30 | 26 | - | - | - | - |
| aldehydeamine *10 | | - | - | 9 | - | - | - | 9 |
| diluent *11 | | - | - | 54 | - | - | - | 46 |
| Condition of irradiation with ultraviolet light | | | | | | | | |
| | adherend | | | polyester | film *12 | | | |
| | amount of irradiation of ultraviolet light (mJ/cm²) | 125 | 750 | 270 | 125 | 500 | 750 | 270 |
| | atmosphere of irradiation with ultraviolet light | nitrogen | air | nitrogen | nitrogen | air | air | nitrogen |
| Evaluation of curing property | | excellent | good | excellent | excellent | poor | excellent | excellent |
| Evaluation of adhesive property | | | | | | | | |
| | peeling strength (N/25 mm) | 220 | 212 | 200 | 18 | 218 | 35 | 20 |
| | rubber attachment | A | A | A | E | A | E | E |

| | | | | | | | | |
|---|---|---|---|---|---|---|---|---|
| Notes *1: Polybutadiene modified with acrylic group at chain ends; manufactured by OSAKA YUKI KAGAKU KOGYO Co., Ltd.; trade name: BAC-45 *2: Styrene-butadiene copolymer modified with acrylic group obtained by introducing acryloyl group (CH₂=CHCO-) into the chain end of the copolymer {Strene content: 22% by mass, Percentage of the modified chain ends: 73% (The unmodified chain ends: OH group), SBR-6 disclosed in JP2005-247954 was used} *3: Phenoxypolyethylene glycol monoacrylate; manufactured by SHIN NAKAMURA KAGAKU KOGYO Co., Ltd.; trade name: AMP-60G *4: Polypropylene glycol diacrylate (PO 7 moles); manufactured by SHIN NAKAMURAKAGAKU KOGYO Co., Ltd.; trade name: APG-400 *5: Pentaerythritol polypropoxyarcrylate; manufactured by NIPPON KAYAKU Co., Ltd.; trade name: KAYARAD TPA-330 *6: Tricyclodecanedimethanol diacrylate; manufactured by SHIN NAKAMURA KAGAKU KOGYO Co., Ltd.; trade name: A-DCP *7: p-dimethylaminobenzoic acid isoamyl ester; manufactured by NIPPON KAYAKU Co., Ltd.; trade name: KAYACURE DMBI *8: 2,4-diethylthioxanthone; manufactured by NIPPON KAYAKU Co., Ltd.; trade name: KAYACURE DETX-S *9: Manufactured by MIKUNI SHIKISO Co., Ltd.; trade name: MHI BLACK #220 (percentage of carbon black: 33% by mass, solid content including carbon black and dispersant: 38.7% by mass; 30 parts by mass of "dispersion of carbon black" in Table 1 means 9.9 parts by mass of carbon black) *10: Reaction products of n-butylaldehyde and aniline; manufactured by OUCHI SHINKO KAGAKU KOGYO Co., Ltd.; trade name: NOCCELOR 8 *11: Methyl isobutyl ketone *12: Manufactured by TOYO BOSEKI Co., Ltd., Ltd.; trade name: A4100; the thickness: 188 µm | | | | | | | | |

**Table 2**

| Formulation | Amount, part by mass |
|---|---|
| Natural rubber | 10 |
| Carbon black | 40 |
| Stearic acid | 2 |
| Petroleum softener | 2 |
| Zinc oxide | 5 |
| Antioxidant ^{*1} | 1.5 |
| Vulcanization accelerator ^{*2} | 1.2 |
| Vulcanization accelerator ^{*3} | 0.75 |
| Sulfur | 2.5 |

| | |
|---|---|
| Notes *1: N-phenyl-N-isopropyl-p-phenylenediamine *2: N-t-butyl-2-benzothiazolylsulfenamide *3: Diphenylguanidine | |

**Table 3**

| Rank of rubber attachment | Fraction of rubber attachment | Condition of film after peeling |
|---|---|---|
| A+ | - | film broken |
| A | 100~80% | film not broken |
| B | smaller than 80~60% | film not broken |
| C | smaller than 60~40% | film not broken |
| D | smaller than 40~20% | film not broken |
| E | smaller than 20~0% | film not broken |

As clearly shown in Table 1, the adhesive compositions of Examples 1 to 3 were excellent in the test for evaluation of the curing property and the test for evaluation of the adhesive property, and the excellent workability in attachment and the excellent adhesion of the sheet of the unvulcanized rubber were achieved simultaneously. In Example 1, the workability was improved from that in Example 2 since the irradiation with ultraviolet light was conducted under the atmosphere of nitrogen.

In contrast, the reaction of adhesion was allowed to proceed excessively in the adhesive compositions of Comparative Examples 1, 3 and 4 to satisfy the curing property, and the adhesive strength decreased. In Comparative Example 2, using the adhesive composition similar to that used in Comparative Example 1, the irradiation with ultraviolet light was conducted under the atmosphere of the air so that the effect of irradiation with ultraviolet light is suppressed. Although the reaction of adhesion proceeded to a suitable degree to increase the adhesive strength, the surface of the adhesive layer was not cured sufficiently, and the workability in attachment of the sheet of the unvulcanized rubber markedly decreased due to insufficient curing.

### Examples 4 and 5 and Comparative Example 5 and 6

### Preparation of a polyester film-rubber composite

One face of a polyester film having a thickness of 188 µm (a polyethylene terephthalate film manufactured by TOYO BOSEKI Co., Ltd.; trade name: A4100) was coated with an adhesive composition prepared in accordance with the formulation shown in Table 4 using a film coater to form an adhesive layer having a thickness of 3 to 5 µm. The irradiation with ultraviolet light in an amount of irradiation of 500 mJ/cm² was conducted under the atmosphere of the air.

To the polyester film having the adhesive layer obtained as described above, a sheet of an unvulcanized rubber composition prepared in accordance with the formulation shown in Table 2 was pressed and vulcanized under a pressure of 1.5 MPa at a temperature of 160°C for 20 minutes. In this manner, 4 types of polyester film-rubber composites having a thickness of 2.3 mm and a size of 80 mm×80mm were obtained. The results of evaluation of the peeling strength and the rubber attachment of the obtained composites are shown in Table 4.

The peeling strength and the rubber attachment of the obtained composites were evaluated by the same methods as Example 1.

**Table 4**

| Example | 4 | 5 | | |
|---|---|---|---|---|
| Comparative Example | | | 5 | 6 |
| Formulation for adhesive composition (part by mass) | | | | |
| conjugated diene copolymer (A) ^{*1} | 100 | 100 | 100 | 100 |
| electron-pair donating compound ^{*2} | 10 | - | 10 | - |
| copper salt of organic acid ^{*3} | 1 | 5 | - | - |
| acrylic monomer ^{*4} | 15 | 15 | 15 | 15 |
| acrylic monomer ^{*5} | 20 | 20 | 20 | 20 |
| acrylic monomer ^{*6} | 7 | 7 | 7 | 7 |
| photopolymerization initiator ^{*7} | 3 | 3 | 3 | 3 |

| Results of evaluation | | | | |
|---|---|---|---|---|
| peeling strength (N/25 mm) | 180 | 209 | 122 | 23 |
| rubber attachment | B | A | C | E |

| | | | | |
|---|---|---|---|---|
| Notes *1: Polybutadiene modified with acrylic group at chain ends (manufactured by RICON RESINS Inc.; trade name: RIACRYL 3500) *2: Dibenzothiazyl disulfide (manufactured by OUCHI SHINKO KAGAKU KOGYO Co., Ltd.; trade name: NOCCELOR DM) *3: Copper dimethyldithiocarbamate (manufactured by OUCHI SHINKO KAGAKU KOGYO Co., Ltd.; trade name: NOCCELOR TTCU) *4: Phenoxypolyethylene glycol monoacrylate; manufactured by SHIN NAKAMURA KAGAKU KOGYO Co., Ltd.; trade name: AMP-60G *5: Polypropylene glycol diacrylate (PO 7 moles); manufactured by SHIN NAKAMURA KAGAKU KOGYO Co., Ltd.; trade name: APG-400 *6: Pentaerythritol polypropoxyacrylate; manufactured by NIPPON KAYAKU Co., Ltd.; trade name: KAYARAD TPA-330 *7: p-dimethylaminobenzoic acid isoamyl ester; manufactured by NIPPON KAYAKU Co., Ltd.; trade name: KAYACURE DMBI | | | | |

### Examples 6 and 7

Two types of polyester film-rubber composites were obtained in accordance with the same procedures as those conducted in Example 4 except that the adhesive compositions shown in Table 5 were used. The results of evaluation of the peeling strength and the rubber attachment of the obtained composites are shown in Table 5. For comparison, the results of Comparative Examples 5 and 6 are also shown in Table 5.

**Table 5**

| Example | 6 | 7 | | |
|---|---|---|---|---|
| Comparative Example | | | 5 | 6 |
| Formulation for adhesive composition (part by mass) | | | | |
| conjugated diene copolymer (A) ^{*1} | 100 | 100 | 100 | 100 |
| electron-pair donating compound ^{*2} | 10 | - | 10 | - |
| iron salt of organic acid ^{*3} | 1 | 5 | - | - |
| acrylic monomer ^{*4} | 15 | 15 | 15 | 15 |
| acrylic monomer ^{*5} | 20 | 20 | 20 | 20 |
| acrylic monomer ^{*6} | 7 | 7 | 7 | 7 |
| photopolymerization initiator ^{*7} | 3 | 3 | 3 | 3 |

| Results of evaluation | | | | |
|---|---|---|---|---|
| peeling strength (N/25 mm) | 148 | 185 | 122 | 23 |
| rubber attachment | C | B | C | E |

| | | | | |
|---|---|---|---|---|
| Notes *1: Polybutadiene modified with acrylic group at chain ends (manufactured by RICON RESINS Inc.; trade name: RIACRYL 3500) *2: 2,4-Toluylenediamine *3: Iron dimethyldithiocarbamate (manufactured by OUCHI SHINKO KAGAKU KOGYO Co., Ltd.; trade name: NOCCELOR TTFE) *4: Manufactured by SHIN NAKAMURA KAGAKU KOGYO Co., Ltd.; trade name: AMP-60G *5: Manufactured by SHIN NAKAMURA KAGAKU KOGYO Co., Ltd.; trade name: APG-400 *6: Manufactured by NIPPON KAYAKU Co., Ltd.; KAYARAD TPA-330 *7: Manufactured by NIPPON KAYAKU Co., Ltd.; KAYACURE DMBI | | | | |

### Examples 8 to 10 and Comparative Example 7

Four types of polyester film-rubber composites were obtained in accordance with the same procedures as those conducted in Example 4 except that the adhesive compositions shown in Table 6 were used. The results of evaluation of the peeling strength and the rubber attachment of the obtained composites are shown in Table 6.

**Table 6**

| Example | 8 | 9 | 10 | |
|---|---|---|---|---|
| Comparative Example | | | | 7 |
| Formulation for adhesive composition (part by mass) | | | | |
| conjugated diene copolymer (A) ^{*1} | 100 | 100 | - | - |
| conjugated diene copolymer (A) ^{*2} | - | - | 100 | 100 |
| electron-pair donating compound ^{*3} | 10 | - | - | - |
| electron-pair donating compound ^{*4} | - | - | 9 | 9 |
| copper stearate ^{*5} | 1 | 5 | 2 | - |
| acrylic monomer ^{*6} | 15 | 15 | - | - |
| acrylic monomer ^{*7} | 20 | 20 | - | - |
| acrylic monomer ^{*8} | 7 | 7 | - | - |
| acrylic monomer ^{*9} | - | - | 70 | 70 |
| photopolymerization initiator ^{*10} | 3 | 3 | - | - |
| photopolymerization initiator ^{*11} | - | - | 6 | 6 |
| diluent ^{*12} | - | - | 19 | 19 |

| Results of evaluation | | | | |
|---|---|---|---|---|
| peeling strength (N/25 mm) | 182 | 215 | 210 | 110 |
| rubber attachment | B | A | A | C |

| | | | | |
|---|---|---|---|---|
| Notes *1: Polybutadiene modified with acrylic group at chain ends (manufactured by RICON RESINS Inc.; trade name: RIACRYL 3500) *2: Polybutadiene modified with acrylic group at chain ends; manufactured by OSAKA YUKI KAGAKU KOGYO Co., Ltd.; trade name: BAC-45 *3: Dibenzothiazyl disulfide (manufactured by OUCHI SHINKO KAGAKU KOGYO Co., Ltd.; trade name: NOCCELOR DM) *4: Reaction products of n-butylaldehyde and aniline; manufactured by OUCHI SHINKO KAGAKU KOGYO Co., Ltd.; trade name: NOCCELOR 8 *5: Copper stearate (manufactured by KANTO KAGAKU Co., Ltd.) *6: Manufactured by SHIN NAKAMURA KAGAKU KOGYO Co., Ltd.; trade name: AMP-60G *7: Manufactured by SHIN NAKAMURA KAGAKU KOGYO Co., Ltd.; trade name: APG-400 *8: Manufactured by NIPPON KAYAKU Co., Ltd.; KAYARAD TPA-330 *9: Manufactured by SHIN NAKAMURA KAGAKU KOGYO Co., Ltd.; trade name: A-DCP *10: Manufactured by NIPPON KAYAKU Co., Ltd.; KAYACURE DMBI *11: Manufactured by NIPPON KAYAKU Co., Ltd.; trade name: KAYACURE DETX-S *12: Methyl isobutyl ketone | | | | |

### Examples 11 and 12

Two types of polyester film-rubber composites were obtained in accordance with the same procedures as those conducted in Example 4 except that the adhesive compositions shown in Table 7 were used. The results of evaluation of the peeling strength and the rubber attachment of the obtained composites are shown in Table 7. For comparison, the results of Comparative Examples 5 and 6 are also shown in Table 7.

**Table 7**

| Example | 11 | 12 | | |
|---|---|---|---|---|
| Comparative Example | | | 5 | 6 |
| Formulation for adhesive composition (part by mass) | | | | |
| conjugated diene copolymer (A) *¹ | 100 | 100 | 100 | 100 |
| electron-pair donating compound *² | 10 | - | 10 | - |
| cobalt acetylacetonate *³ | 1 | 5 | - | - |
| acrylic monomer *⁴ | 15 | 15 | 15 | 15 |
| acrylic monomer *⁵ | 20 | 20 | 20 | 20 |
| acrylic monomer *⁶ | 7 | 7 | 7 | 7 |
| photopolymerization initiator *⁷ | 3 | 3 | 3 | 3 |

| Results of evaluation | | | | |
|---|---|---|---|---|
| peeling strength (N/25 mm) | 192 | 218 | 122 | 23 |
| rubber attachment | A | A | C | E |

| | | | | |
|---|---|---|---|---|
| Notes *1: Polybutadiene modified with acrylic group at chain ends (manufactured by RICON RESINS Inc.; trade name: RIACRYL 3500) *2: Dibenzothiazyl disulfide (manufactured by OUCHI SHINKO KAGAKU KOGYO Co., Ltd.; trade name: NOCCELOR DM) *3: Cobalt acetylacetonate (manufactured by KANTO KAGAKU Co., Ltd.) *4: Manufactured by SHIN NAKAMURA KAGAKU KOGYO Co., Ltd.; trade name: AMP-60G *5: Manufactured by SHIN NAKAMURA KAGAKU KOGYO Co., Ltd.; trade name: APG-400 *6: Manufactured by NIPPON KAYAKU Co., Ltd.; KAYARAD TPA-330 *7: Manufactured by NIPPON KAYAKU Co., Ltd.; KAYACURE DMBI | | | | |

### Examples 13 to 16

Four types of polyester film-rubber composites were obtained in accordance with the same procedures as those conducted in Example 4 except that the adhesive compositions shown in Table 8 were used. The results of evaluation of the peeling strength and the rubber attachment of the obtained composites are shown in Table 8.

**Table 8**

| Example | 13 | 14 | 15 | 16 |
|---|---|---|---|---|
| Formulation for adhesive composition (part by mass) | | | | |
| conjugated diene copolymer (A) ^{*1} | 100 | 100 | 100 | 100 |
| electron-pair donating compound ^{*2} | 10 | - | 10 | - |
| zinc phosphate | 1 | 5 | - | - |
| copper sulfide | - | - | 1 | 5 |
| acrylic monomer ^{*3} | 15 | 15 | 15 | 15 |
| acrylic monomer ^{*4} | 20 | 20 | 20 | 20 |
| acrylic monomer ^{*5} | 7 | 7 | 7 | 7 |
| photopolymerization initiator ^{*6} | 3 | 3 | 3 | 3 |

| Results of evaluation | | | | |
|---|---|---|---|---|
| peeling strength (N/25 mm) | 137 | 161 | 140 | 168 |
| rubber attachment | B | B | B | B |

| | | | | |
|---|---|---|---|---|
| Notes *1: Polybutadiene modified with acrylic group at chain ends (manufactured by RICON RESINS Inc.; trade name: RIACRYL 3500) *2: Dibenzothiazyl disulfide (manufactured by OUCHI SHINKO KAGAKU KOGYO Co., Ltd.; trade name: NOCCELOR DM) *3: Manufactured by SHIN NAKAMURA KAGAKU KOGYO Co., Ltd.; trade name: AMP-60G *4: Manufactured by SHIN NAKAMURA KAGAKU KOGYO Co., Ltd.; trade name: APG-400 *5: Manufactured by NIPPON KAYAKU Co., Ltd.; KAYARAD TPA-330 *6: Manufactured by NIPPON BAYAKU Co., Ltd.; KAYACURE DMBI | | | | |

As clearly shown in Tables 4 to 8, the adhesive compositions of Examples 4 to 16 exhibited the excellent peeling strengths and the excellent rubber attachments. The adhesive ability was remarkably enhanced by using a metal and/or metal compound (D2) in the adhesive composition of the present invention.

### INDUSTRIAL APPLICABILITY

The adhesive composition and the process for adhesion using the adhesive composition of the present invention can be advantageously applied widely to production of rubber-resin composites, rubber articles, laminates of resin films and molded articles of resins requiring adhesion of two adherends and, in particular, to production of reinforced materials of rubber and rubber articles requiring adhesion of rubber and an adherend.

## Claims

1. An adhesive composition which comprises a conjugated diene-based polymer (A) having at least one functional group having a photo-curable unsaturated hydrocarbon group at a chain end, a polymerizable compound (B), a photopolymerization initiator (C) and at least one of an active energy ray-shielding agent (D1) and a metal and/or metal compound (D2).

2. An adhesive composition according to Claim 1, wherein the conjugated diene-based polymer (A) has a weight-average molecular weight of 500 to 100,000.

3. An adhesive composition according to Claim 1, wherein the photo-curable unsaturated hydrocarbon group is an acryloyl group or a methacryloyl group.

4. An adhesive composition according to Claim 1, which comprises 20 to 400 parts by mass of the polymerizable compound (B) per 100 parts by mass of the conjugated diene-based polymer (A).

5. An adhesive composition according to any one of Claims 1 to 4, wherein the polymerizable compound (B) is at least one compound selected from the group of polymerizable monomers (b1) and polymerizable oligomers (b2).

6. An adhesive composition according to Claim 5, wherein the polymerizable monomer (b1) is at least one compound selected from the group of 2-vinylpyridine, 4-vinylpyridine, m-(N,N-dimethylamino)styrene, p-(N,N-dimethylamino)-styrene, acrylamide, methacrylamide, N-methylacrylamide, N-isopropyl-acrylamide, N-n-butylacrylamide, N-n-octylacrylamide, N,N-dimethyl-acrylamide, 1-vinylimidazole, allylamine, 2,5-distyrylpyridine, 2-dimethyl-amionoethyl methacrylate, N-vinyl-2-pyrrolidone, 2-vinyl-2H-indazole, 4-diisopropylamino-1-butene, trans-2-butene-1,4-diamine, 2-vinyl-4,6-diamino-1,3,5-triazine, 4-methyl-5-vinylthiazole, N-vinylformamide, N,N-dimethylaminoethyl acrylate, N,N-dimethylaminopropyl acrylamide, acryloylmorpholine and N,N-diethylacrylamide.

7. An adhesive composition according to Claim 5, wherein the polymerizable monomer (b1) is at least one compound selected from the group of monofunctional (meth)acrylic monomers, difunctional (meth)acrylic monomers and (meth)acrylic monomers having a functionality of three or more.

8. An adhesive composition according to Claim 5, wherein the polymerizable monomer (b1) is a (meth)acrylic monomer (b3) having a structure represented by the following formula (2): 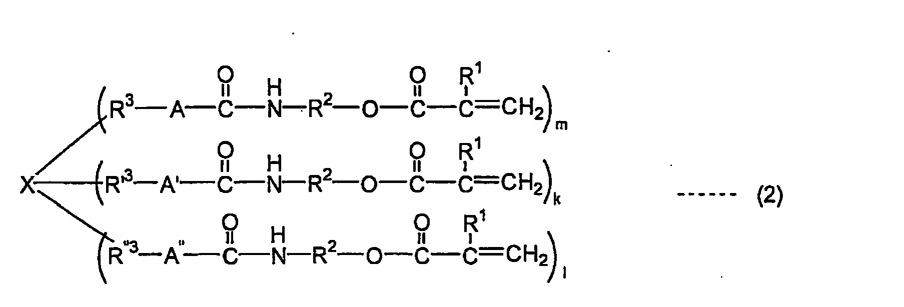 wherein X represents a heterocyclic group having nitrogen atom, A, A' and A" represent single bond, -O- bond, -S- bond or -NH- bond respectively, R¹ represents hydrogen atom or methyl group, R² represents a divalent hydrocarbon having 1 to 12 carbon atoms, R³, R'³ and R"³ represent single bond or a divalent hydrocarbon group having 1 to 12 carbon atoms which may be bonded to the group represented by X via a hetero atom respectively, m represents an integer of 1 to 3, k represents an integer of 0 to 2,1 represents an integer of 0 to 2, and 1 ≤ m+k+1 ≤ 3.

9. An adhesive composition according to Claim 5, wherein the polymerizable oligomer (b2) is a (meth)acrylic oligomer.

10. An adhesive composition according to Claim 1, which comprises 0.1 to 10 parts by mass of the photopolymerization initiator (C) per 100 parts by mass of the conjugated diene-based polymer (A).

11. An adhesive composition according to Claim 1 or 10, wherein the photopolymerization initiator (C) is at least one compound selected from the group of 2,4-diethylthioxanthone, p-dimethylaminobenzoic acid isoamyl ester, benzoin, benzoin alkyl ethers, 2,2-dimethoxy-2-phenylacetophenone, benzophenone, benzil, diacetyl, diphenyl sulfide, eosin, thionine, 9,10-anthraquinone and 2-ethyl-9,10-anthraquinone.

12. An adhesive composition according to Claim 1, which comprises 1 to 50 parts by mass of the active energy ray-shielding agent (D1) per 100 parts by mass of the conjugated diene-based polymer (A).

13. An adhesive composition according to Claim 1 or 12, wherein the active energy ray-shielding agent (D1) is a carbon black and/or a titanium oxide.

14. An adhesive composition according to Claim 1, wherein a metal in the metal and/or metal compound (D2) is at least one metal selected from the group of Mg, Al, Sc, Ti, V, Cr, Mn, Fe, Co, Ni, Cu, Zn, Mo, Ru, Rh, Pb, Ag, Sn, Pb, W, Re, Os and Ir.

15. An adhesive composition according to Claim 14, wherein the metal in the metal and/or metal compound (D2) is a metal element in Period 4 of Group 3 to Group 12 of a Periodic Table.

16. An adhesive composition according to any one of Claims 1, 14 and 15, wherein the metal and/or metal compound (D2) is at least one species selected from the group of organic acid salts and organic complex compounds of metals and ions formed by dissociation thereof.

17. An adhesive composition according to Claim 16, wherein the organic acid forming the organic acid salt is an aliphatic or alicyclic carboxylic acid.

18. An adhesive composition according to Claim 17, wherein the aliphatic or alicyclic carboxylic acid is at least one acid selected from the group of naphthenic acid, octylic acid, stearic acid and versatic acid.

19. An adhesive composition according to Claim 16, wherein the organic acid forming the organic acid salt is a dithiocarbamic acid.

20. An adhesive composition according to Claim 16, wherein the organic complex compound of metal is a metal acetylacetonate.

21. An adhesive composition according to any one of Claims 1, 14 and 15, wherein the metal and/or metal compound (D2) is an inorganic acid salt of a metal and/or an ion formed by dissociation thereof.

22. An adhesive composition according to Claim 21, wherein the inorganic acid forming the inorganic acid salt is hydrochloric acid, sulfuric acid, nitric acid, hypochlorous acid, phosphoric acid, silicic acid or a mixture thereof.

23. An adhesive composition according to Claim 1, wherein a metal compound in metal and/or metal compound (D2) is a metal oxide, a metal nitride, a metal sulfide or a mixture thereof.

24. An adhesive composition according to Claim 1, which further comprises an electron-pair donating compound (E).

25. An adhesive composition according to Claim 24, wherein the electron-pair donating compound (E) is a compound having a nitrogen atom having an unpaired electron and/or a compound forming a compound having a structure having an unpaired electron by thermal decomposition.

26. An adhesive composition according to Claim 25, wherein the compound having a nitrogen atom having an unpaired electron is at least one compound selected from the group of amine compounds, compounds having an aliphatic amine residue and compounds having a heterocyclic amine residue.

27. An adhesive composition according to Claim 26, wherein the amine compound is at least one compound selected from the group of aliphatic amines, aromatic amines, aldehydeamines, guanidines, thioureas and heterocyclic amines.

28. An adhesive composition according to Claim 25, wherein the compound forming a compound having a structure having an unpaired electron by thermal decomposition is a vulcanization accelerator.

29. A process for adhesion of an adherend to a sheet of a rubber composition which comprises the steps of:
forming an adhesive layer by coating at least a portion of a surface of the adherend with an adhesive composition described in any one of Claims 1, 2, 3, 4, 10, 12, 14, 15, 23, 24 and 25;
irradiating a surface of the adhesive layer with an active energy ray; and
vulcanizing a sheet of an unvulcanized rubber composition while the sheet is pressed to the surface of the adhesive layer which has been irradiated with the active energy ray.

30. A process for adhesion according to Claim 29, wherein, in the step of irradiating a surface of the adhesive layer with an active energy ray, the irradiation with the active energy ray is conducted under an atmosphere of an inert gas.

31. A process for adhesion according to Claim 29, wherein the adherend is a resin film.

32. A process for adhesion according to Claim 31, wherein the resin film is a polyester film.
